(19)

**Europäisches Patentamt**
**European Patent Office**
**Office européen des brevets**

(11)  **EP 4 029 745 B1**

(12)  **EUROPEAN PATENT SPECIFICATION**

(45) Date of publication and mention
of the grant of the patent:
**18.09.2024 Bulletin 2024/38**

(51) International Patent Classification (IPC):
**B60T 8/172** (2006.01)   **B60W 40/064** (2012.01)
**B60W 40/068** (2012.01)   **B60W 40/101** (2012.01)

(21) Application number: **21183221.7**

(52) Cooperative Patent Classification (CPC):
**B60T 8/1725; B60W 40/064; B60W 40/068;**
**B60W 40/101;** B60T 2240/02; B60T 2240/03

(22) Date of filing: **01.07.2021**

(54) **DEVICE AND METHOD FOR REAL-TIME ESTIMATION OF AVAILABLE ADHERENCE**

VORRICHTUNG UND VERFAHREN ZUR REALZEIT-SCHÄTZUNG DER VERFÜGBAREN ADHÄRENZ

DISPOSITIF ET MÉTHODE D'ESTIMATION EN TEMPS RÉEL DE L'ADHÉRENCE DISPONIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2021 IT 202100000512**

(43) Date of publication of application:
**20.07.2022 Bulletin 2022/29**

(73) Proprietor: **Megaride S.r.l.**
**80141 Napoli (IT)**

(72) Inventors:
• **Sachnevych, Aleksandr**
**80141 NAPOLI (IT)**

• **Timpone, Francesco**
**80125 NAPOLI (IT)**
• **Farroni, Flavio**
**80127 NAPOLI (IT)**

(74) Representative: **Conversano, Gabriele**
**Laforgia, Bruni & Partners srl**
**Via Michele Garruba, 3**
**70122 Bari (IT)**

(56) References cited:
**EP-A2- 3 023 761**     **WO-A1-2017/102086**
**US-A1- 2005 057 346**     **US-A1- 2019 299 948**

**Description**

Technical field

The present invention relates to a device which allows to estimate in real time the available coefficient of adhesion between each tyre of a land vehicle and the road. The device is modular, able to be adapted to the various input configurations in order to estimate the available adhesion of each tyre and so of the vehicle.

State of the art

Methods for the estimation of the potential coefficient of adhesion are available in literature. US2019299948 discloses a control apparatus for a vehicle which calculates a first road surface friction coefficient of a road surface in a contact with a wheel and a second road surface friction coefficient on a basis of a detection value from a contactless sensor that contactlessly detects a road surface state.

In US2016123866 authors use threshold values to distinguish various kinds of asphalt on the basis of estimated dynamic and kinematic parameters, anyway without considering the modifications of the tyre dynamic behavior as a function of the thermodynamic status and wear. In EP3028909 authors use a method based on Kalman filter and on the tyre multi-physical status for estimating the tyre rigidity, as well as its temperature, pressure and wear, anyway without indications about a possible calculation of the instantaneous and potential coefficient of adhesion. In EP23355046 authors are able to estimate the potential grip provided that it is possible to reach a certain interaction strength between road and tyre and without considering the effects of temperature, pressure and wear. In JP2010051160 and WO2008029524 authors estimate the kinematics concerning the tyre, i.e. the slip, in order to optimize the vehicle control, but do not consider the estimation of the coefficient of adhesion. In US6508102 and GB2435102 authors estimate the instantaneous coefficient of adhesion without calculating the potential coefficient of adhesion and without considering the thermodynamic effects and the tyre wear.

Technical problem

To the best of the current inventors, at the state of the art there are not known devices configured to estimate efficiently and in real time the coefficient of adhesion of each tyre as a function both of the tyre structural features and its physical conditions (temperature, pressure, wear), in addition to the vehicle kinematic and dynamic conditions.

Aim of the invention

Aim of the present invention is to provide a device configured to estimate in real time the coefficient of adhesion of each tyre of a driving land vehicle and the potential maximum adhesion of each tyre, which considers explicitly the tyre kinematic, dynamic, thermodynamic and wear conditions.

Description of the invention

The present invention provides a device for the estimation of a land vehicle adhesion, comprising electronic computing means installed in a vehicle, configured to acquire the signals detected by:

- at least a triaxial accelerometer integral to the vehicle and connected to said electronic computing means;
- a steering angle meter;
- a plurality of encoders, configured to measure the angular velocity of each wheel of said vehicle. Moreover, said computing means are configured preferably, but not limitingly, to acquire the signals detected by:

    - a plurality of temperature sensors, configured to acquire the outer temperature of each tyre;
    - pressure sensors configured to acquire the inner air pressure of each tyre.

The device acquires preferably the parameters through various interfaces, among which the vehicle CAN interface, the CAN interface of the other devices connected in the measurement chain, analogic and digital ports.
Moreover, said electronic computing means are preferably configured to acquire also the signal deriving from a GPS sensor and/or signals deriving from one or more extensometers installed on the suspensions arms.
In particular, starting from the information about the suspension geometry, the knowledge of the points where the extensometers are installed, it is possible to estimate the compressions and elongations of the suspensions arms, which can be reported in the tyre reference systems by using suitable computing systems, known per se at the state of the art and available in literature.

The invention provides also a vehicle comprising such sensors and such electronic computing means. Computer programs are also loaded on said electronic computing means, and are configured:

(100) to estimate the inner temperature of each tyre as a function of the outer temperature and inner air pressure:

The temperature estimation occurs preferably by using a Kalman filter, discretizing the tyre according to the Fourier equations, by applying the finite volume method.
The tyre outer temperature and the tyre inner pressure are provided in input to the estimator;
the estimator provides in output the tyre temperature value (Ttyre).

(200) to calculate the angular velocity (w) and the components of the velocity of translation ($V_x$, $V_y$) for each tyre;
(300) to determine the slip ratio (sr) and the slip angle (sa) for each tyre, as a function of the components of the velocity of translation (Vx, Vy), of the angular velocity (w) and of the tyre rolling height (R), defined as:

$$sr = \frac{\omega R - V_x}{V_x}$$

$$sa = \mathrm{atan}\left(\frac{V_y}{|V_x|}\right)$$

(400) to calculate the longitudinal, lateral and vertical components (Fx, Fy, Fz) of the forces exchanged by each tyre with the ground, as a function of the longitudinal (kx) and transversal rigidities (ky)

$$F_x = k_x(sr, sa) \cdot sr$$

$$F_y = k_y(sr, sa) \cdot sa$$

$$F_z = f(a_x, a_y, \omega_z)$$

Wherein the values of rigidities (kx, ky) are estimated as a function of the tyre slip ratio, slip angle, inner pressure and temperature,

$$k_x = f\left(sr, sa, T_{tyre}, p_{tyre}\right)$$

$$k_y = f\left(sr, sa, T_{tyre}, p_{tyre}\right)$$

while the vertical force (Fz) is calculated by using suitable computing means, known per se at the state of the art and available in literature, starting from kinematic parameters in terms of linear accelerations (ax, ay) and angular velocities (wz) acquired by the triaxial accelerometer.

The linear (ax, ay) and angular (wz) accelerations are acquired by an inertial platform or by a triaxial accelerometer, positioned integrally to the vehicle body, as near as possible to the centre of gravity of the sprung weight of the vehicle itself.

So, the rigidities kx and ky are expressed as a function of the slip ratio and slip angle kinematic variables, and of the Ttyre and Ptyre thermodynamic variables. The functions expressing this dependance do not have a predefined shape but can be estimated with various numerical approaches which consider the vehicle and tyre physical models, and whose estimation becomes the more correct and refined the more data are collected (Kalman filtering, DAE, etc.). The rigidities kx and ky are always defined positive, and:

- the rigidity kx: is a function of the slip ratio parameter with an increasing-constant-decreasing trend while sr increases;

is a function of the slip angle parameter with a decreasing trend (regardless of the sign of the parameter sa) while slip angle increases; is a function of Ttyre with constant-decreasing-constant trend while Ttyre increases; is function of Ptyre with a decreasing-constant trend while Ptyre increases;

- the rigidity ky is a function of the slip angle parameter with increasing-constant-decreasing trend while the slip angle parameter increases; is a function of the slip ratio with decreasing trend (regardless of the sign of sr) while the slip ratio increases; is a function of Ttyre with constant-decreasing-constant trend while Ttye increases; is a function of Ptyre with decreasing-constant trend while Ptyre increases.

(500) to estimate the values of the instantaneous coefficient of friction for each tyre as a function of the three components of the force exchanged with tyre and ground, according to the equations of dynamic balance for each tyre, with the following formula:

$$\mu_{instaneous,estimation} = \frac{\sqrt{F_x{}^2 + F_y{}^2}}{F_z}$$

(550) to estimate the maximum coefficient of friction (also called potential coefficient of friction) in the same vertical load (Fz), kinematic (slip ratio and slip angle) and thermodynamic (pressure and temperature of each tyre) conditions:

$$\mu_{potential} = f(F_z, sr, sa, T_{tyre}, p_{tyre}, w_{tyre})$$

(600) to compare the values of the coefficient of friction calculated at point (500) with the estimation of the maximum coefficient of friction (or potential coefficient of friction) estimated at point (550) in the same vertical load (Fz), kinematic and thermodynamic conditions:

$$\mu_{potential} = f(F_z, sr, sa, T_{tyre}, p_{tyre}, w_{tyre})$$

In particular, in order to consider explicitly the tyre features in the calculation of the potential coefficient of friction, such coefficient estimated at step (550) can be explained as follows. According to what known at the state of the art, the potential coefficient of friction (here defined as "base" potential coefficient of friction $\mu_{potential1}$) is generally described as a function of the vertical force (Fz), of the slip angle (sa) and of the slip ratio (sr):

$$\mu_{potential1} = f(F_z, sr, sa)$$

In the method according to the present invention, instead, in order to obtain an estimation of the real maximum coefficient of friction ($\mu_{potential}$) the base potential coefficient of friction ($\mu_{potential1}$) is multiplied by two coefficients which consider the tyre multi-physical status:

- a first coefficient, $tp_\mu(T_{tyre}, P_{tyre})$ function of the tyre thermodynamic status expressed in terms of tyre temperature and tyre inner pressure,
- a second coefficient ($w_\mu(w_{tyre})$), function of the tyre wear status, explained as described in the following.

To obtain the following formula of the real maximum coefficient of friction ($\mu_{potential}$):

$$\mu_{potential} = \mu_{potential1} \cdot tp_\mu \cdot w_\mu$$

Said first coefficient $tp_\mu(T_{tyre}, P_{tyre})$ is expressed by means of a bivariate normal distribution:

$$tp_\mu\big(T_{tyre}, P_{tyre}\big)$$

$$= \frac{1}{2\pi k_T k_P \sqrt{1-\rho^2}}$$

$$\cdot exp\left\{-\frac{1}{2(1-\rho^2)}\left[\left(\frac{T_{tyre}-T_{opt}}{k_T}\right)^2 + \left(\frac{P_{tyre}-P_{opt}}{k_P}\right)^2\right.\right.$$

$$\left.\left. - 2\rho\frac{(T_{tyre}-T_{opt})(P_{tyre}-P_{opt})}{k_T k_P}\right]\right\}$$

Where $T_{tyre}, P_{tyre}$ are the parameters of tyre temperature and pressure estimated starting from other kinematic and dynamic physical parameters which can be acquired in a vehicle, while $T_{opt}, P_{opt}$ are the respective tyre optimal working temperature and the pressure.

Said second coefficient, function of the tyre wear status, is preferably estimated as explained in the following:

$$w_\mu\big(w_{tyre}\big) = k_{w,1} + k_{w,2} w_{tyre}$$

As it is clear so far, the device is configured to consider explicitly the contributions of tyre pressure ($P_{tyre}$) and tyre temperature ($T_{tyre}$) and tyre wear (in terms of residue track thickness ($w_{tyre}$)) in the estimation of the maximum friction (i.e. the adhesion available) for each tyre.

For both parameters, the adhesion variability while the parameters vary depends on the respective calibration parameters whose value, for each tyre model, can be identified thanks to the test at desk or on the road.

The parameters $k_T$, $k_p$, $k_w$ are in fact conveniently identified by means of tests carried out for each tyre model, with analysis of the data acquired by the vehicle by using thermal, pressure sensors and optical or tactile measurement systems of the track thickness.

The determination of these parameters allows to define the correlation global curve between $\mu_{potential}$ and the additional considered variables of temperature, pressure and wear.

This formulation allows ultimately to explain the correlation between the tyre potential adhesion, thermodynamic aspects and wear, quantifying as, for each tyre model, the potential maximum adhesion depends on the difference between the working temperature and pressure and the optimal temperature and pressure, and on the difference of the tyre wear conditions compared to the ones of a new tyre. Said electronic computing means are also preferably configured to define, as a function of the comparison carried out at point (600), a series of parameters as a function of the values of the instantaneous coefficient of friction and the maximum coefficient of friction.

A first parameter of interest is the ratio between the instantaneous coefficient of friction and the maximum coefficient of friction:

$$KPI = \frac{\mu_{istantaneous, estimation}}{\mu_{potential, model}}$$

It is to be specified as all the methods of estimation of a tyre adhesion with the ground known at the state of the art do not consider temperature, pressure and wear, since these are not standard parameters acquired by the vehicle gearcase, and above all since the temperature of interest is the tyre inner one which can be only estimated - but not directly measured - thanks to the real-time physical models which can be input in the estimators embedded in the vehicle.

Therefore, the device according to the invention improves the reliability of the estimation of the maximum adhesion compared to what known at the state of the art, since it considers explicitly the multi-physical aspects, among which temperature and pressure.

Starting from the working temperature and pressure measurements, it is estimated which is the difference between what is estimated in current working conditions and what the model predicts according to the calibration parameters, giving as a result an objective measure of the adhesion difference between the instantaneous and the potential value, which can be obtained thanks to the calibration parameters in similar working conditions.

Considering the difference between what the model predicts according to the calibration parameters and what is estimated for each instant, the possible differences are due to not regular or uneven road surface, to possible presence of road peculiarities, to the system malfunctioning.

Thanks to the modular structure of the algorithms, the device is able to be adapted to the configuration of input signals, by activating implemented logics of model-based estimation, machine learning and of statuses.

The modular structure of the device usage with the possibility of interfacing various quantities of input signals, as a function of the vehicle configuration, of the sensors availability, of the possible usage (road, motorsport, etc.) in order to estimate the instantaneous and potential coefficient of adhesion represents the innovation of the device.

In addition to the default output, which according to what described consists in providing an estimation of the instantaneous and potential coefficient of adhesion and various parameters based on the comparison of these two values, the device can be also configured to provide values of further parameters detected and used for the estimations, among which the kinematic ones (speed, accelerations and slip) and the dynamic ones (forces and torques) of the single tyre and the vehicle as a whole.

Among the usage potentialities of the device there are the infotainment in the single vehicle with HMI dedicated interfaces, information collection on the single vehicle in loco in in cloud for monitoring the single consumers, for vehicle and driver profiling, for monitoring the status of the vehicle and its sub-systems, of the tyre and the road surface. Moreover, the device can be adopted for optimizing the consumption logics of the electric and with autonomous driving vehicles, thus favouring the reduction of consumptions and the optimization of the charge cycles as a function of the vehicle kind, the path conditions, the traffic and driver profile.

**Claims**

1. Device for the estimation in real time of a land vehicle adhesion, comprising electronic computing means installed in a vehicle, configured to acquire the signals detected by:

    - at least a triaxial accelerometer integral to the vehicle;
    - a steering angle meter of said vehicle;
    - a plurality of encoders, configured to measure the angular velocity of each wheel of said vehicle;
    - a plurality of temperature sensors, configured to acquire the outer temperature of each tyre;
    - a plurality of pressure sensors configured to acquire the inner air pressure of each tyre,

    **characterized in that** computer programs are loaded on said electronic computing means, and are configured:

    (100) to estimate the inner temperature of each tyre as a function of the outer temperature and inner air pressure;
    (200) to calculate the angular velocity (w) and the components of the velocity of translation ($V_x$, $V_y$) for each tyre;
    (300) to determine the slip ratio (sr) and the slip angle (sa) for each tyre, as a function of the velocities of translation (Vx, Vy), of the angular velocity (w) and of the tyre rolling height (R);
    (400) to calculate the longitudinal, lateral and vertical components (Fx, Fy, Fz) of the forces exchanged by each tyre with the ground;
    (500) to estimate the values of the instantaneous coefficient of friction from the equations of dynamic balance on each tyre:

    $$\mu_{instaneous,estimation} = \frac{\sqrt{F_x^2 + F_y^2}}{F_z}$$

    (600) to compare the values of the coefficient of friction calculated at point (500) with the estimation of the maximum coefficient of friction estimated in the same vertical load (Fz), kinematic and thermodynamic conditions:

    $$\mu_{potential} = f(F_z, sr, sa, T_{tyre}, p_{tyre}, w_{tyre})$$

2. Device according to claim 1, **characterized in that** at point (600) said estimation of the maximum coefficient of friction is obtained by multiplying the base potential coefficient of friction ($\mu_{potential1}$), function of vertical force (Fz), slip angle (sa) and slip ratio (sr):

    $$\mu_{potential1} = f(F_z, sr, sa)$$

by:

- a first coefficient, $tp_\mu(T_{tyre}, P_{tyre})$ function of the tyre thermodynamic status expressed in terms of temperature and pressure,
- a second coefficient ($w_\mu(w_{tyre})$), function of the tyre wear status.

**3.** Device according to claim 2, **characterized in that** the dependance of said first coefficient on the tyre thermodynamic status in terms of temperature and pressure is expressed as bivariate normal distribution.

**4.** Device according to any one of the preceding claims, **characterized in that** said electronic computing means are also configured to define a series of parameters as a function of the values of the instantaneous coefficient of friction and of the maximum coefficient of friction, comprising the ratio between the instantaneous coefficient of friction and the maximum coefficient of friction:

$$KPI = \frac{\mu_{istantaneous,estimation}}{\mu_{potential,\ model}}$$

**5.** Vehicle comprising a device according to any one of the preceding claims.

**Patentansprüche**

**1.** Vorrichtung zur Echtzeitschätzung der Bodenhaftung eines Landfahrzeugs, die elektronische Rechenmittel umfasst, die in einem Fahrzeug installiert sind und so konfiguriert sind, dass sie die Signale erfassen, die von folgenden Elementen erfasst werden:

- mindestens einem dreiachsigen Beschleunigungsmesser, der in das Fahrzeug integriert ist;
- einem Lenkwinkelmesser des Fahrzeugs;
- einer Vielzahl von Encodern, die so konfiguriert sind, dass sie die Winkelgeschwindigkeit jedes Rades des Fahrzeugs messen;
- einer Vielzahl von Temperatursensoren, die so konfiguriert sind, dass sie die Außentemperatur jedes Reifens erfassen;
- einer Vielzahl von Drucksensoren, die so konfiguriert sind, dass sie den Innenluftdruck jedes Reifens erfassen,

**dadurch gekennzeichnet, dass** Computerprogramme auf die elektronischen Rechenmittel geladen sind und so konfiguriert sind:

(100) die Innentemperatur jedes Reifens als Funktion der Außentemperatur und des Innenluftdrucks zu schätzen;
(200) die Winkelgeschwindigkeit (w) und die Komponenten der Translationsgeschwindigkeit ($V_x$, $V_y$) für jeden Reifen zu berechnen;
(300) das Schlupfverhältnisses (sr) und des Schlupfwinkels (sa) für jeden Reifen als Funktion der Translationsgeschwindigkeiten ($V_x$, $V_y$), der Winkelgeschwindigkeit (w) und der Reifenabrollhöhe (R) zu bestimmen;
(400) die Längs-, Quer- und Vertikalkomponenten (Fx, Fy, Fz) der Kräfte zu berechnen, die jeder Reifen mit dem Boden austauscht;
(500) die Werte des momentanen Reibungskoeffizienten aus den Gleichungen des dynamischen Gleichgewichts für jeden Reifen zu schätzen:

$$\mu_{instantaneous,\ estimation} = \frac{\sqrt{F^2_x + F^2_y}}{F_z}$$

(600) die Werte des Reibungskoeffizienten, die am Punkt (550) berechnet wurden, mit der Schätzung des maximalen Reibungskoeffizienten, der unter denselben Bedingungen der vertikalen Belastung (Fz), der kinematischen und thermodynamischen Belastung geschätzt wurde, zu vergleichen:

$$\mu_{potentio} = f(F_z, \; st, \; sa, \; T_{tyre}, \; p_{tyre}, \; w_{tyre})$$

**2.** Vorrichtung nach Anspruch 1, **dadurch gekennzeichnet, dass** am Punkt (600) wird die Schätzung des maximalen Reibungskoeffizienten durch Multiplikation des Basispotentialreibungskoeffizienten ($\mu_{potential1}$), Funktion der vertikalen Kraft (Fz), des Schlupfwinkels (sa) und des Schlupfverhältnisses (sr), erhalten wird:

$$\mu_{potential} = f(F_z, \; st, \; sa)$$

mit:

- einem ersten Koeffizienten, $tp_{\mu}(T_{tyre}, P_{tyre})$ Funktion des thermodynamischen Reifenzustands, ausgedrückt in Bezug auf Temperatur und Druck,
- einem zweiten Koeffizienten ($w_{\mu}(w_{tyre})$), Funktion des Reifenverschleißzustands.

**3.** Vorrichtung nach Anspruch 2, **dadurch gekennzeichnet, dass** die Abhängigkeit des ersten Koeffizienten vom thermodynamischen Reifenzustand in Bezug auf Temperatur und Druck als bivariate Normalverteilung ausgedrückt wird.

**4.** Vorrichtung nach einem der vorhergehenden Ansprüche, **dadurch gekennzeichnet, dass** die elektronischen Rechenmittel außerdem so konfiguriert sind, dass sie eine Reihe von Parametern als Funktion der Werte des momentanen Reibungskoeffizienten und des maximalen Reibungskoeffizienten definieren, die das Verhältnis zwischen dem momentanen Reibungskoeffizienten und dem maximalen Reibungskoeffizienten umfassen:

$$KPI = \frac{\mu_{instantaneous, \; estimation}}{\mu_{potential, \; model}}$$

**5.** Fahrzeug, das eine Vorrichtung nach einem der vorhergehenden Ansprüche umfasst.

**Revendications**

**1.** Dispositif d'estimation en temps réel d'une adhérence d'un véhicule terrestre, comprenant des moyens électroniques de calcul installés dans un véhicule, configurés pour acquérir les signaux détectés par:

- au moins un accéléromètre triaxial intégré au véhicule;
- un compteur d'angle de braquage dudit véhicule;
- une pluralité de codeurs, configurés pour mesurer la vitesse angulaire de chaque roue dudit véhicule;
- une pluralité de capteurs de température, configurés pour acquérir la température externe de chaque pneu;
- une pluralité de capteurs de pression configurés pour acquérir la pression de l'air interne de chaque pneu,

**caractérisé en ce que** des programmes informatiques sont chargés sur lesdits moyens électroniques de calcul, et sont configurés pour:

(100) estimer la température interne de chaque pneu en fonction de la température externe et de la pression de l'air interne;
(200) calculer la vitesse angulaire (w) et les composantes de la vitesse de translation ($V_x$, $V_y$) pour chaque pneu;
(300) déterminer le taux de glissement (sr) et l'angle de glissement (sa) pour chaque pneu, en fonction des vitesses de translation (Vx, Vy), de la vitesse angulaire (w) et de la hauteur de roulement du pneu (R);
(400) calculer les composantes longitudinales, latérales et verticales (Fx, Fy, Fz) des forces échangées par chaque pneu avec le sol;
(500) estimer les valeurs du coefficient de frottement instantané à partir des équations d'équilibre dynamique sur chaque pneu:

$$\mu_{\text{instantaneous, estimation}} = \frac{\sqrt{F^2{}_\text{x} + F^2{}_\text{y}}}{F_\text{z}}$$

(600) comparer les valeurs du coefficient de frottement calculé au point (550) avec l'estimation du coefficient de frottement maximum estimé dans les mêmes conditions de charge verticale (Fz), cinématiques et thermodynamiques:

$$\mu_{\text{potentio}} = f(F_z, \ st, \ sa, \ T_{tyre}, \ p_{tyre}, \ w_{tyre})$$

2. Dispositif selon la revendication 1, **caractérisé en ce qu'**au point (600) ladite estimation du coefficient de frottement maximum est obtenue en multipliant le coefficient de frottement potentiel de base ($\mu_{\text{potentiel1}}$) en fonction de la force verticale (Fz), de l'angle de glissement (sa) et du rapport de glissement (sr):

$$\mu_{\text{potential}} = f(F_z, \ st, \ sa)$$

par:

- un premier coefficient, $tp_\mu(T_{tyre}, P_{tyre})$ en fonction de l'état thermodynamique du pneu exprimé en termes de température et pression,
- un deuxième coefficient ($w_\mu(w_{tyre})$) en fonction de l'état d'usure du pneu.

3. Dispositif selon la revendication 2, **caractérisé en ce que** la dépendance dudit premier coefficient sur l'état thermodynamique du pneu en termes de température et de pression est exprimée sous forme de distribution normale bivariée.

4. Dispositif selon l'une quelconque des revendications précédentes, **caractérisé en ce que** lesdits moyens électroniques de calcul sont également configurés pour définir une série de paramètres en fonction des valeurs du coefficient de frottement instantané et du coefficient de frottement maximal, comprenant le rapport entre le coefficient de frottement instantané et le coefficient de frottement maximum:

$$KPI = \frac{\mu_{\text{instantaneous, estimation}}}{\mu_{\text{potential, model}}}$$

5. Véhicule comprenant un dispositif selon l'une quelconque des revendications précédentes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019299948 A
- US 2016123866 A
- EP 3028909 A
- EP 23355046 A
- JP 2010051160 B
- WO 2008029524 A
- US 6508102 B
- GB 2435102 A